# EUROPEAN PATENT APPLICATION

(11) **EP 2 591 679 A1**
(43) Date of publication of application: **15.05.2013**
(21) Application number: 11189016.6
(22) Date of filing: 14.11.2011
(51) Int. Cl.: A22B 3/08

(54) **Method and installation for handling poultry**

(71) Applicant: Topkip B.V., 7546 PD Enschede (NL)
(72) Inventor: Van Stuyvenberg, Wim, 4011 EP Zoelen (NL); Dirkzwager, Ary, 7546 PD Enschede (NL); Motshagen, Danny, 3453 PL De Meern (NL); Mouthaan, Martin, 4011 LG Zoelen (NL); Van Bijnen, Twan, 5151 JN Drunen (NL)
(74) Representative: Prins, Hendrik Willem

(57) **Abstract**

The present invention relates to a method for handling poultry (6), such as chicken, turkey, geese, duck and quail, comprising the steps of (i) taking the poultry; (ii) placing the poultry in a confinement (4) such that the poultry legs extend from the confinement; and (iii) coupling the poultry legs to handling means (8), and to an installation for handling poultry, such as chicken, turkey, duck and quail, comprising means for taking the poultry and placing the poultry in a confinement such that the poultry legs extend from the confinement; and means for coupling the poultry legs to handling means.

## Description

The present invention relates to a method and installation for handling poultry.

Presently, poultry, such as chicken, turkey, geese, duck and quail, are delivered at a slaughterhouse in containers or cages.

The animals are deloaded on a conveyor band. Manually the poultry is taken by the poultry legs and in an downwardly suspended position with force hooked in shackles by the ankles of the animal. In order to keep the animals as quit as possible the handling of the poultry occurs in a relatively dark environment.

The hooking of the animals with their ankles in the shackles is carried out with force in order to have the animals tightly hooked as to avoid release from the shackles when the animal is electrically stunned in a water bath.

Hooking of the animals with their legs in the shackles or other hooking means, is generating much stress and pain. Often the legs may be injured, dislocated or broken. In addition, it is possible that one of the legs is not correctly hooked so that the animal is suspended by one leg.

Due to this manner of poultry handling, many animals will have their wings fluttering resulting in undesired movement, excitement and also a possible release of the animal or neighbouring animal with one or two legs from the shackles by which they are transported to the slaughtering unit.

Presently it has become hardly acceptable to handle poultry in the manner described above. Not only because of the impact on the animals, but also in view of the negative influence on the quality of the poultry product obtained. Because due to the stress and muscle contraction bones may be broken and poultry tissue infiltrated by blood.

The present invention has for its object to provide a method and installation for handling poultry which avoids the above mentioned drawbacks and inacceptable animal handling and impact, and still provide a method and installation for handling poultry in which the poultry is handled with low stress and substantially no injuries or generation of pain will occur, whereas the handling may be automated and carried out at high speed.

This is obtained with a method according to the invention for handling poultry, such as chicken, turkey, geese, duck and quail, comprising the steps of:
i) taking the poultry;
ii) placing the poultry in a confinement such that the poultry legs extend from the confinement; and
iii)coupling the poultry legs to handling means.

The gist of the invention is that the poultry is placed in a confinement such that due to the anatomy of the poultry and in particular of the poultry knee joint, the poultry legs stretch and extend from the confinement. These extended legs are then used for coupling to handling means. The poultry is placed in an anatomically acceptable and relatively quiet manner in a confinement. In the confinement the poultry is in a relatively comfortable position. Preferably the wings also enclosed by the confinement thereby avoiding stress generating wing fluttering.

The inner form and shape of the confinement is preferably adapted to the anatomy of the poultry to be confined.

The confinement may be a funnel with an opening through which the animal extends outwardly with its head and may its neck, whereas the rest of the animal body is confined. Preferably the confinement is a beaker of which the side wall is converging to its bottom and having a longitudinal slot in the side wall through which the neck of the poultry passes during confining. The neck and head of the poultry extend near the beaker bottom outwardly and may be supported.

Obviously, any type of confinement may be used which allows for confining the poultry in the above described manner with the legs extending and available for coupling to the handling means.

Due to the form of the confinement, the animal has to stretch and extend its legs because of the anatomical orientation of the knee join which when pressed toward the animal body during placement in the confinement will result in a natural anatomical stretching and extending of the legs from the rear part of the animal body. Being confined the animal is in a comfortable position and will stay quiet and appreciate hardly any stress. Having placed in the confinement, the poultry with its legs and extended it in a generally well defined position and localisation, then the extended legs can be coupled to the handling means in a reliable manner, at low force, and at a speed which is well controlled.

The taking of the poultry and the placing of the poultry in the confinement may be done manually by a person or may be done mechanically, such as by a robot. The poultry is generally taken in a more or less anatomical manner which is well defined for the person doing it manually. But also for a robot this can be done in the same manner. Thereto, the robot may be guided for instance a camera that made an observation of the actual position of the poultry to be taken. In the alternative, the poultry may be offered to the robot in a pre-oriented position of the poultry, such as on a conveyor belt or in cages or boxes. In this manner, the poultry with it legs extended may be coupled in a well defined and reliable manner to the handling means. The poultry will not be in a stressed or painful situation and the coupling can be carried out at low force, in a reliable manner, substantially without generating injuries to the animal in whatever manner.

In order to have a coupling of the poultry legs to the handling means carried out in a reliable manner, this coupling may be carried out by a relative movement in between the confinement and handling means. This means that either the confinement may be moved towards the handling means for coupling the extended poultry legs to the handling means, or the handling means may move towards the confinement. This means that either the poultry legs are stationary or the handling means are stationary. In the alternative, it is also possible to couple the extended legs to the coupling means by a relative movement in which the confinement and the handling means are moved towards one another in a reliable and predetermined manner.

When being coupled with its poultry legs to the handling means, the poultry may be transported to poultry working means. In a preferred embodiment, the coupling of the poultry legs to the handling means is carried out such that the confinement and handling means both move at substantially the same speed (at least during coupling) as the transport means. This means that when the confinement and the handling means are reciprocating to one another they both are transported by the transport means with the same speed, so that there is no difference in speed in between the confinement and the handling means other than in relation to the realisation of the coupling of the poultry legs to the handling means. Obviously, the coupling may also take place with the confinement and the handling means move at different speeds.

According to a preferred embodiment is the transport by the transport means of on the one hand the handling means and on the other of the confinement, synchronised.

The confinement may be a confinement which has the form of a beaker comprising a sidewall which is having a form similar to the outer body of the poultry. This means that the sidewall converges towards the bottom and that via the lateral opening in the sidewall the animal may extend with its head and neck to the outside. In the alternative, a converging funnel may also be used as a confinement. Also separate blades or arms may be used which will confine the poultry in an comfortable and anatomically acceptable manner and have the poultry legs extend outwardly from the animal body, so that the extending legs may be coupled to the handling means.

It is important that the confinement is accommodating the animal in a more or less anatomically supported manner such that its legs will extend from the confinement and preferably the head in another direction of the confinement. In this manner the animal is in a relatively stress less situation allowing further handling and coupling in a reliable manner.

Before slaughtering, the coupled poultry may be stunned by using for instance electro stunning or gas stunning. Electro stunning may be carried out by emerging the animal head into a water bath through which an electric current is passed into the body of the poultry. Electro stunning may also be carried out by head-head stunning, head-leg stunning and/or head-cloaca stunning. In this respect one or more electrodes are connected to the head and another electrode to the head, the leg and/or the cloaca. By this type of electro stunning using electrodes it is possible to measure the electro conductivity of the animal and determine the amount of electrical power required for carrying out sufficient electro stunning of the animal until the animal is slaughtered while being unconscious. Animal stunning may also be carried out by gas stunning.

When the coupled poultry is to be slaughtered in the so-called halal manner, then the animal after being coupled is directed towards the slaughter unit in which the animal is slaughtered and debleeded.

Stunning may be carried out at some distance after having coupled the poultry with its leg to the handling means. Otherwise, and preferably, the poultry is (preferably electro) stunned directly after having being coupled to the handling means and while still present in the confinement. This allows for a precise and reliable electro stunning of the animal because of for instance the correct and exact localisation of the animal head. Such electro stunning may be carried out preferably by head-head stunning using two electrodes which are temporarily contacted sidewise to the animal head.

However, it is also possible that the poultry after being placed in the confinement is first stunned and subsequently in the stunned and unconscious state by the extending legs coupled to the handling means.

Traditionally the animals to be slaughtered are hooked and in a suspended position transported to the slaughter unit. According to a preferred embodiment, the coupling of the poultry legs to the handling means is in the form of hooking the poultry legs to hook means, such as shackles, which are comprised by the handling means and have been incorporated in the transport means. The handling means comprise structures for hooking a some determined distance the poultry legs.

The animals are hooked into the handling means and transported in the suspended position to the stunning or slaughter unit and working units. This allows for the incorporation of this innovative and novel method into existing methods and installation for slaughtering poultry.

As mentioned above, the poultry is placed into the confinement such that the poultry legs and extend from the confinement and the poultry legs are then coupled to the handling means. In order to allow for a coupling in a very reliable manner, it is preferred that the poultry legs are positioned in a particular position which is predetermined and used for steering and operating the handling means. According to another preferred embodiment or in combination with a former embodiment, it is an option to arrest the poultry legs in the extended and preferably defined position, such that any undesired abrupt or spastic movement of the animals or its legs is avoided so that the animal legs after having been positioned and/or arrested are in a well defined and fixed position.

As indicated before the poultry is taken manually or automatically with a robot and then placed in the confinement. However the confinement is such that the poultry is to be placed into the confinement in a predetermined manner and position. This means for manually taking the poultry that the poultry has to be turned in its sitting position with the head in a particular direction and from there, normally by a curved movement placed in the confinement. This placing movement is not appreciated by the animal as stress full. But the animal being curious is following the movement such that ultimately the poultry is looking around in a preferably suspended position to the place from which he was moved.

When using an automatic taking of the animal, such as by a robot, the robot will take the animal, bring it in a predetermine position and from that position will carry out a movement such that the poultry is placed in the confinement in the predetermined manner. Obviously it is possible to have camera observation of the animal before it is taken by the robot, so that the robot with its robot arms will take the animal already in such a manner that a simple less curved movement path is to be carried out for placing the poultry in the confinement. According to another embodiment it is possible that the poultry before being offered for taking manually or automatically is already brought in a position in which it is offered such that a simple movement is sufficient for bringing it in the confinement placed position.

Another aspect of the present invention relates to an installation for handling poultry. The installation according to the invention comprises:
- means for taking the poultry and placing the poultry in a confinement such that the poultry legs extend from the confinement; and
- means for coupling the poultry legs to handling means.

As indicated herein before the coupling means and the confinement are able to carry out a relative movement for coupling the poultry legs to the handling means which have preferably the form of traditional hooking means such as shackles. During the coupling of the poultry legs to the handling means, the handling means and the confinement move in a generally same linear transport speed.

The installation may comprise stunning means for stunning the animals before being slaughtered. Stunning may be carried out by gas stunning or by electro stunning as discussed herein before. The stunning may be carried out after the animal has been placed into the confinement and before further transport. Otherwise it is possible after being placed in the confinement that the animal is transported to separate stunning means. It is preferred that directly after placing the poultry into the confinement that the animal is subjected to electro stunning most preferably by head-head stunning by placing electrodes to both sides of the head.

After measuring of the conductivity the required electro power can be determined for stunning the animals sufficiently long as to stay unconscious up to being reached and slaughtered in the slaughter unit. The electrical current to be applied is generally within the range of 100-400mA. Preferably the range is between 150-300mA, such as 240mA. The stunning takes place in a relatively short time period such as between 0.05-10 seconds preferably 0.1-3 seconds. The stunning is such that the animal stays unconscious for at least about 30 seconds, such as 35-50 seconds. Obviously it is also possible to have the animals stunned by dipping in a water bath and passing electrical current through the water bath and the animal. Also gas stunning is considered suitable for use.

The confinement may comprise structural elements, such as pins, dimples or indentations which will accommodate the extending legs such that the poultry legs are in a particular position relative to the confinement and therefore relative in relation to the handling means. This allows for a reliable hooking or coupling of the animal legs to the coupling means preferable of the shackles. In order to avoid any undesired movement of a leg after it has been extended from the confinement and preferable positioned in the positioning means, then the animal legs are arrested such that the animal cannot no longer in a substantial manner move its legs from the extended position to a retracted position or any other side or hide movement. Obviously, the poultry legs may also be arrested without being positioned.

Obviously it is possible to have the animals stunned before the legs are coupled to the handling means. However, it is preferred that the poultry is first coupled to the handling means before being stunned. If stunning is taking place at a different location from the unit in which the poultry legs are coupled to the handling means, than is preferred that the animal legs are positioned and/or arrested before coupling.

When the installation comprises means for orienting the poultry before taken manually or automatically, it is preferred that such means comprise either open cages or supporting elements which have the animal accommodated in a predetermined position such as a position in which the animal is having its head facing the person who will manually take the poultry or facing the robot that will take the poultry. If better, it is also possible that the head is oriented in a direction remote of the person or robot that is to take the animal. The predetermined position is such that the animal taken is moved in a manner such into the confinement that the poultry substantially does not experience any stress or fear.

Mentioned and other characterizing features of the method and installation according to the invention will be further elucidated and illustrated by making reference to the annexed drawings which are given for information purposes only and not intended to limit the invention in any aspect. In the drawings:
Figure 1 is a schematically front view of an installation according to the invention for handling poultry;
Figures 2A-2H are side views of the various stages of handing poultry with the installation shown in figure 1;
Figures 3A-3H are various perspective views of the handling of poultry according to another embodiment;
Figures 4A-4C are detailed views of the animal in the confinement, with the animal being coupled and arrested to the handling means, and the confinement and coupling means in relation to the localisation of the extended legs;
Figures 5A and 5C are a front view, and figure 5B a side view of another installation for automatic handling poultry according to the invention;
Figures 6A and 6B show in perspective view two embodiments for handling poultry using a robot;
Figure 7 is a perspective view of a carrousel used carrousel type of installation according to the invention for automatic handing of poultry;
Figure 8 is a top view of the carrousel installation shown in figure 7;
Figures 9A-9C show poultry orientation prior of being taken and placed in to a confinement; and
Figures 10A-10D show a confinement provided with an elegant form of electrode head-head stunning of poultry.

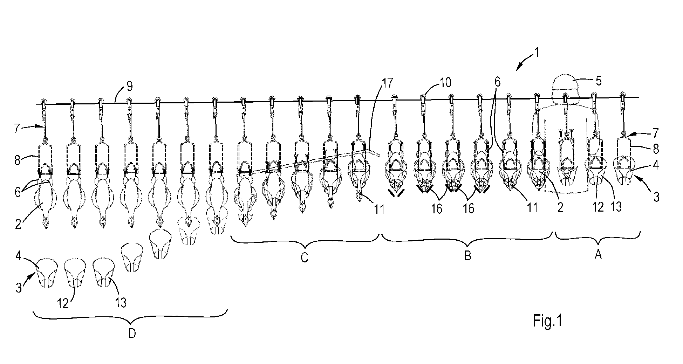

Figure 1 shows an installation 1 according to the invention for handling poultry 2, such as a chicken 2. The installation 1 comprises confinements 3 in the form of beakers 4. The poultry 2 is taken by a person 5 and placed in the beaker 4. In the confinement 3 the poultry extends its legs 6. The legs 6 are coupled to handling means 7 having the form of shackles 8. The shackles 8 are coupled to the chain 9 of transport means 10.

The person 5 takes the poultry 2 and places the poultry 2 in an oriented manner in the beaker 4. As shown in figure 1 the poultry 2 extends with the head 11 and neck through a slot 12 in the converging wall 13 of the beaker 4. The poultry 2 is placed in the confinement 3 at low stress and feels comforted when accommodated in the confinement 2.

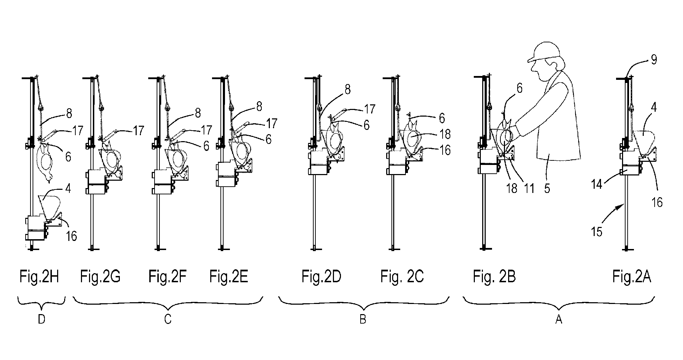

The beaker 2 is mounted on a rider 14 which is vertically movable along guiding means 15, which rider 14 is also provided with head electrodes 16 for electro stunning, see also figure 2.

In section A in figure 1, the poultry 2 is taken and placed by the person 5 in the beakers 4. In the next section B the confined poultry 2 with the legs 6 extending are electro stunned by head-head stunning using the electrodes 16. The legs 6 of the stunned and unconscious poultry 2 are arrested at the beaker 4 by an arresting bar 17 which holds or arrests the legs 6 at the beaker 4. The bar is inclined downwardly as the beaker 4 is moving downwardly in section C. Due to the downward movement of the beaker 4 the extended and arrested legs 6 are coupled to the shackle 8 by the angles. During the coupling action the beakers 4 and the confinements 3 move sidewise by the transport means at the same speed although they move relative to each other in vertical direction. The unconscious poultry 2 coupled via the ankles to the shackles is transported to working means, such as means for debleeding and the like. The coupling of the poultry 2 in this stress less and low injury manner proceeds in a reliable manner and at a speed of 2000 to 14000 birds per hour.

As shown in figure 2, the person 5 takes a poultry 2 with the wings 18 pressed against the poultry body and places the poultry in the beaker 4 with the head down and legs 6 upward in section A. In section B the electrodes 16 are pressed against the head 11 which is extending out of the beaker 4. The conductivity is measured and a calculated electric current is lead trough the head 11 such that the poultry 2 remains unconscious until being slaughtered in the working unit. In section C the bar 17 arrests the legs 6 at the beaker 4. The beaker 4 is lowered and the arrested legs 6 are coupled to the shackle 8. In section D the beaker 4 is separated from the unconscious poultry 2 hanging with the ankles from the shackle 8.

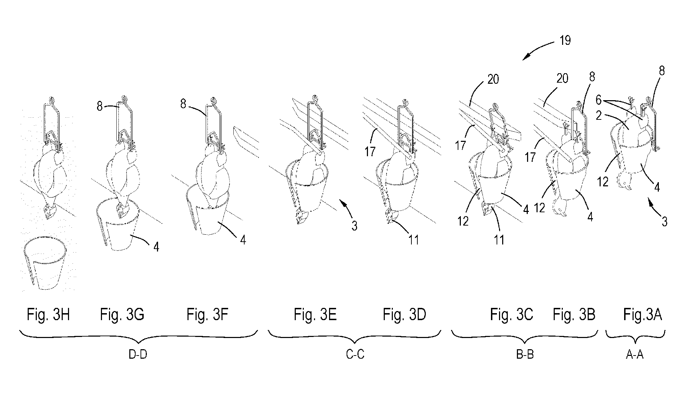

Figure 3 shows another installation 19 at various stages. In stage AA the poultry 2 is placed in an oriented manner in the confinement 3 having the form of a beaker 4. The beaker 4 has a slot 12 through which the head 11 extends. The legs 6 extend from the beaker upwardly. In section BB the legs 6 are arrested at the beaker 4 by a bar 17 and a ridge 20 moving the shackle 8 forwardly towards the confinement 3. In section CC the poultry 2 is electro stunned with the electrodes 16 pressed against the sides of the poultry head 11. After stunning in section DD, the beaker 4 is moved downwardly whereby the legs are coupled to the shackle 8. Obviously, coupling could also be accomplished by moving the shackles 8 upwardly, or moving shackles 8 and confinements 3 in remote directions.

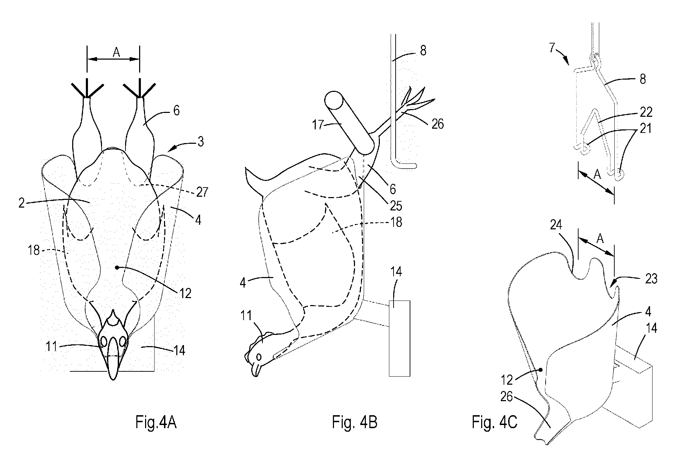

Figure 4 shows more in detail the cooperation between the confinement 3 and the handling means 7. As shown in figure 4A the poultry 2 is confined with the wings pressed against the body in an anatomical manner in the beaker 4 of the confinement 3. The head 11 passed through a lateral slot 12 and extends outwardly. The legs 6 extend outwardly at a distance A. The distance A is fixed by the positioning means 23 having the form of indentations 24 arranged in the beaker 4 at the distance A.
The knee joint 25 allows for an extension of the legs 6 when pressed by the beaker inner wall to the body of the poultry 2. A arresting bar 17 is arranged over the legs 6 so that the legs 6 are lodged in the indentations 24 avoiding the legs 6 by undesired movements of spasms to be released from the in indentations 24. In this position the legs also extend beyond and above hooks 21 of the shackle 8. These hooks 21 are maintained at the distance A by a spacer 22. When the beaker 3 is connected to the rider 14 the bar 17 moves away from the shackle 8, then the legs 6 with the ankles 26 are caught by the hooks 21 and thereby coupled to the shackle 8 comprised by the handling means 7, see figure 4B. As shown in figure 4C the beaker is provided with a support 27 for the head 11 of the poultry.

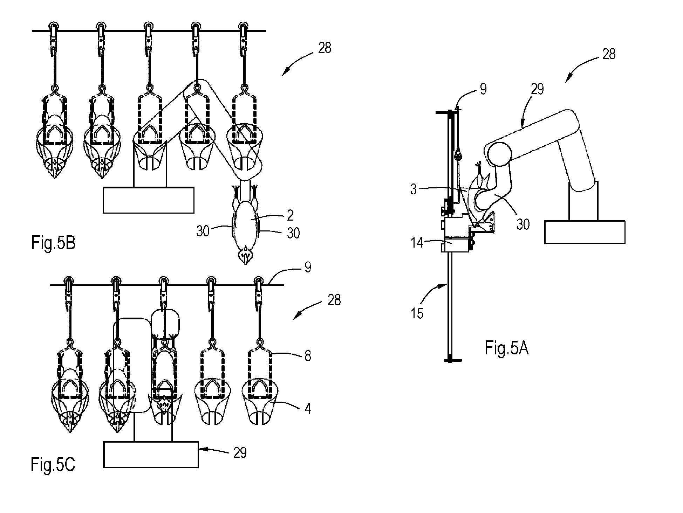

Figures 5A and 5B show another installation 28 according to the invention. This installation 28 comprises a robot 29 for taking the poultry 2 and placing the poultry 2 in the confinement 3 having the form of a beaker 4. The robot 29 takes the poultry 2 with the robot arms 30 such the wings 18 are pressed against the poultry body and by a curved movement of the taken poultry is placed into the beaker 4 as described above.

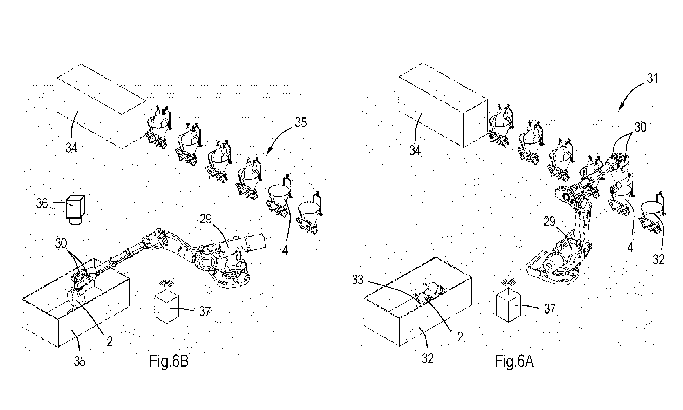

Figure 6A shows an installation 31 according to the invention comprising a robot 29 which takes with the robot arms 30 the poultry 2 from a supply unit 32. The supply unit 32 accommodates the poultry 2 in an oriented manner on separate supports 33. The robot 29 takes the pre-oriented poultry 2 from the supply unit 32 and places the poultry in the desired position in the beaker 4. Hereafter the beaker 4 confining the poultry is transported to a stunning unit 34 for electric, gas or water bath stunning.

In figure 6B the poultry 2 are provided in the supply unit 35 but in random orientation. A camera 36 observes the poultry 2 to be taken by the robot arms 30 and steers the robot arms 30 such that the poultry 2 is taken and moved into the beaker 4 in the desired position as described. The filled beaker 4 is transported to the stunning unit 34. The robots 29 are controlled by a control unit 37 such that the installation can be operated in a closed space in the absence of personnel thereby improving the hygienic conditions.

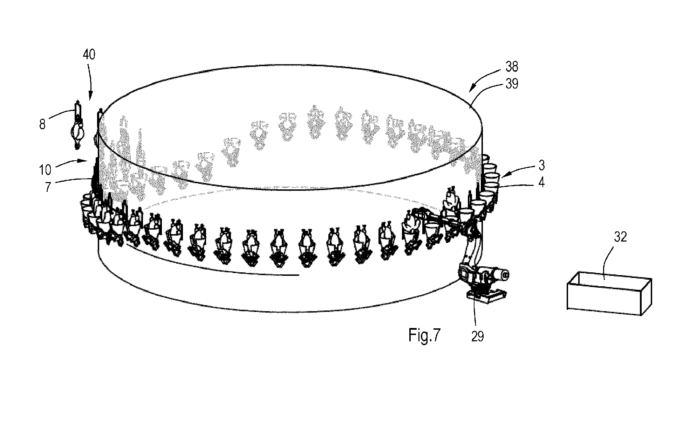

Figure 7 shows another installation 38 according to the invention. The confinements 3 and the handling means 10 are arranged on a carousel 39. The confinements 3 in the form of beakers 4 are permanently mounted on the carousel 39 and can move vertically mounted on the described rider 14. The robot 29 places the poultry 2 in the beakers with are then in a cooperative interaction mode with the handling means 7 in a sector 40 along the carousel 39. In this sector 40 the beakers 4 move downwardly thereby hooking the poultry 2 with the ankles 26 to the shackles 8. The shackles 8 leave the carousel 39 and are transported to the working unit (not shown).

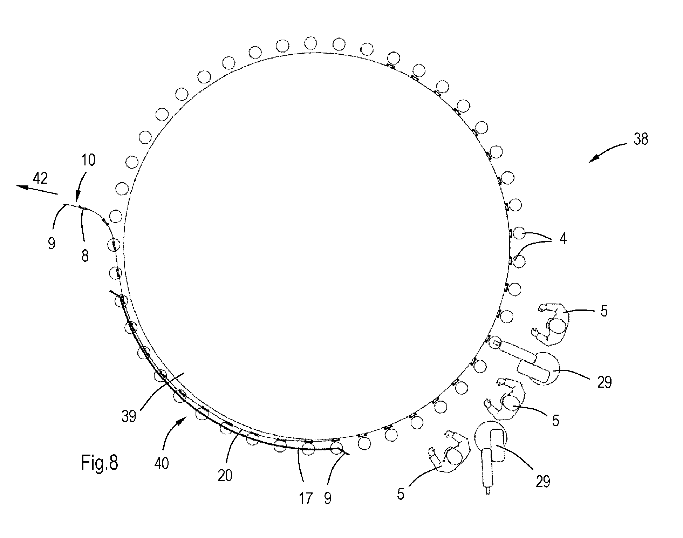

Figure 8 shows an installation similar to the installation 38 shown in figure 7. The installation uses robots 29 and persons 4 for placing poultry of various sizes, ages or sorts into the beakers 4. In sector 40 the chain 9 aligns with the carousel 39, and the legs are arrested by the bar 17 and ridge 20. After hooking by moving the shackles 8 upwardly by raising the chain 9 of the transport means 10 the poultry is coupled the shackle 8 and moved along arrow 42 to halal slaughter means (not shown).

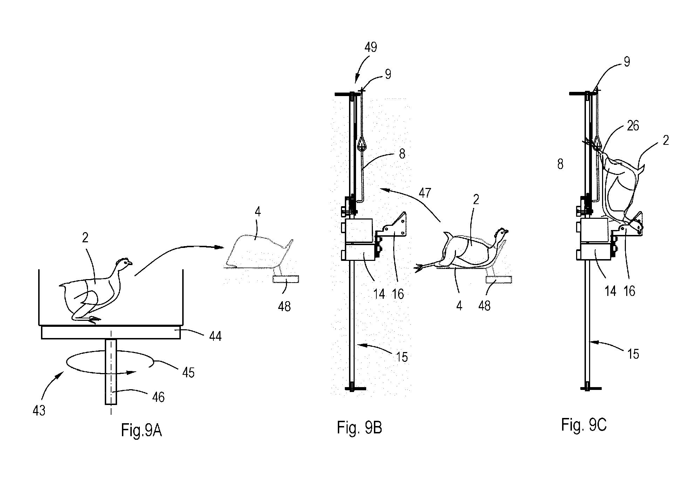

Figure 9A-9B shows orientation means 43 for orienting the poultry before taking by the person 5 or robot 29. The orientation means 43 comprise a support 44 which support 44 can be rotated along the arrow 45 by the rotor 46. Thereby the poultry can be brought in a desired orientation such that the person 5 and robot 29 can carry out the same optimal movement for placing the poultry 2 in the confinement 3 and thereafter on the rider of the transported means 10. When oriented as shown in figure 9A the poultry 2 is translated into the beaker 4. Inserted in the beaker 4 the poultry 2 is mounted onto the installation 49 by connecting a rider part 48 carrying the beaker 4 to the rider 14, see figures 9B and 9C.

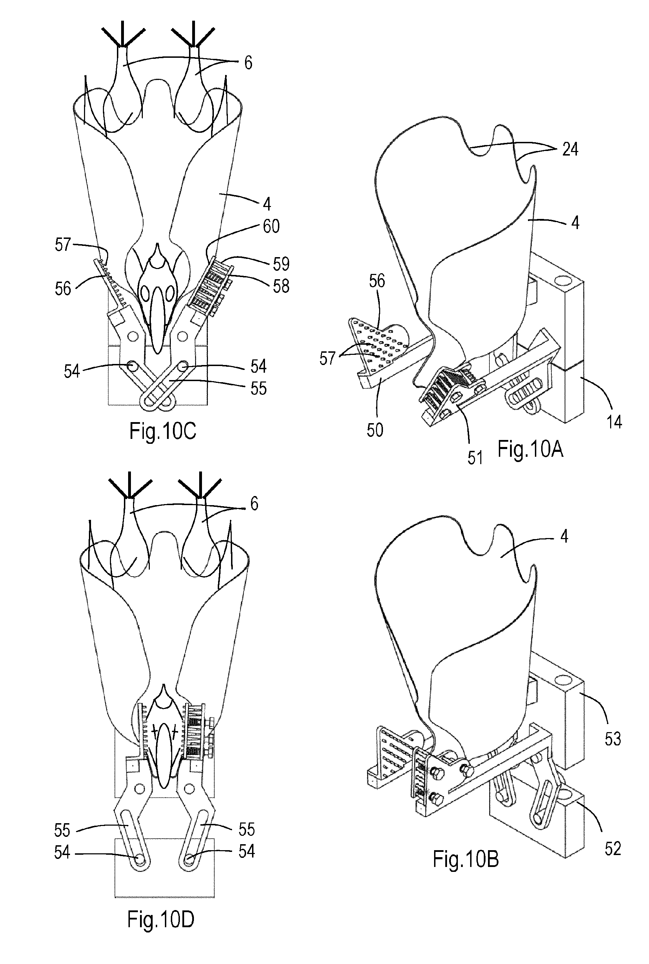

Finally figures 10A-10D show a beaker 4 provided with new electrodes according to the invention. The electrode 50 comprises a plate 56 provided with pins 57. The electrode 51 comprises a plate 58 provided with pins 59 that may extend through a springs activated plate 60 provide with pin openings. The pins will extend through the plate 60 when the electrode 51 is pressed against the head of the poultry. This results in a reliable and optimal contact with the poultry head for electro stunning. Thereto, the rider parts 52 and 53 move towards each other whereby the pins 54 travel through the slots 55 urging the electrodes 50 and 51 towards the poultry head.

## Claims

1. Method for handling poultry, such as chicken, turkey, geese, duck and quail, comprising the steps of:
i) taking the poultry;
ii) placing the poultry in a confinement such that the poultry legs extend from the confinement; and
iii)coupling the poultry legs to handling means.

2. Method as claimed in claim 1, wherein the coupling step iii) comprises a relative movement between the confinement and the handling means.

3. Method as claimed in claim 2, wherein the handling means comprise transport means for transporting the coupled poultry to working means, and preferably during coupling the confinement moves at a speed substantially equal to the transport means speed.

4. Method as claimed in any of the claims 1-3, wherein the coupled poultry is stunned and/or slaughtered.

5. Method as claimed in any of the claims 1-4, wherein the coupling step iii) comprises hooking the poultry legs to hook means comprised by the handling means.

6. Method as claimed in any of the claims 1-5, wherein before the coupling step iii) the poultry legs are positioned and/or arrested.

7. Method as claimed in any of the claims 1-6, wherein the poultry is oriented in a defined position prior to the taking the poultry in step i).

8. Installation for handling poultry, such as chicken, turkey, geese, duck and quail, comprising:
- means for taking the poultry and placing the poultry in a confinement such that the poultry legs extend from the confinement; and
- means for coupling the poultry legs to handling means.

9. Installation as claimed in claim 8, wherein the coupling means and confinement are relatively movable for coupling the poultry legs to the handling means.

10. Installation as claimed in claim 8 or 9, comprising transport means for transporting the coupled poultry to working means and during coupling the confinement and the coupling means move at a speed substantially equal to the speed of the transport means.

11. Installation as claimed in any of the claims 10, comprising stunning means and/or slaughter means.

12. Installation as claimed in any of the claims 8-11, wherein the coupling means comprise hooking means for hooking the poultry via the legs.

13. Installation as claimed in any of the claims 8-12, comprising means for positioning the poultry legs.

14. Installation as claimed in any of the claims 8-13, comprising means for orienting the poultry to be taken in a defined position prior to the taking the poultry by the taking means.
